# EUROPEAN PATENT APPLICATION

(11) **EP 2 418 605 A2**
(43) Date of publication of application: **15.02.2012**
(21) Application number: 11176797.6
(22) Date of filing: 08.08.2011
(51) Int. Cl.: G06K 9/00, G06K 9/22

(54) **Local Search Device and Local Search Method**

(30) Priority: 09.08.2010 JP 2010178723
(71) Applicant: NEC Magnus Communications, Ltd., Tokyo (JP)
(72) Inventor: Yamazaki, Junichi c/o NEC Magnus Communications, Ltd., Tokyo (JP)
(74) Representative: Vossius & Partner

(57) **Abstract**

A Local search device includes a camera module for taking a photo an image and acquired image information; a positioning module, a directional measurement module and an view field angle information acquisition module for acquiring location information of its own, direction information of photo and field angle of view information at a time when said camera module photographs an image, re-spectively; an information processing module for storing and processing information including said image information, said location information of its own, said direction information of photo and said field angle of view information; and an image display module for indicating said stored image information, wherein said information processing module determines, from said location information of its own, said direction information of photo and said field angle of view information acquired and stored when said camera module has photographed an image, a direction range fitting into a photographed image-plane of said photographed image, and extracts a target object existing within said direction range and data associated with said target object from a database, and wherein, in an image indicated when said stored image information is displayed on said image display module, data associated with said extracted target object is indicated corresponding to a place where said target object is located.

## Description

This application is based upon and claims the benefit of priority from Japanese Patent Application No. JP 2010-178723, filed on August 9, 2010, the disclosure of which is incorporated herein in its entirety by reference.

The present invention relates to a local search device and a local search method, and, more particularly, to a local search device and a local search method for searching for data associated with a target object by a screen indicating a photographed image.

In recent years, along with functional improvement of a mobile communication terminal such as a cellular phone, a local search utilizing an AR (Augmented Reality) technology which indicates information associated with a photographic subject on a screen imaged by a camera in an overlapping manner has become easily usable.

For example, in patent document 1 (Japanese Patent No. 4294093), there is described a technology which, while taking in an image with an equipped camera, identifies a subject and its way of being viewed from the position and the direction of a terminal apparatus, and indicates an image made by combining an image of associated information about the subject with the actual image in a manner corresponding to the actual image. In this technology, first, the location of a photographic subject is obtained from location information and azimuth information which is acquired by position determination entity (such as a GPS (Global Positioning System) and a directional measurement apparatus (such as an electronic compass) equipped in a terminal apparatus. Next, the photographic subject is identified by collating the location of the photographic subject with registered geographic data. Further, associated data about the identified photographic subject registered with the geographic data is indicated as an image on the camera image in real time in an overlapped manner.

By such technology, a user can obtain information about a target object located in its surrounding through a display screen of a mobile terminal.

### SUMMARY

An object of the present invention is to provide a local search device and a local search method, in which it is not needed to operate a camera provided in a terminal apparatus in the state always facing a photographic subject, and thus which can reduce the user's burden and restriction how to use it substantially.

A local search device includes a camera module for photographing an image and acquiring image information; a positioning module, a directional measurement module and an field angle of view field angle information acquisition module for acquiring location information of its own, direction information of photo and field angle of view information at a time when said camera module photographs an image, respectively; an information processing module for storing and processing information including said image information, said location information of its own, said direction information of photo and said field angle of view information; and an image display module for indicating said stored image information, wherein said information processing module determines, from said location information of its own, said direction information of photo and said field angle of view information acquired and stored when said camera module has photographed an image, a direction range fitting into a photographed image-plane of said photographed image, and extracts a target object existing within said direction range and data associated with said target object from a database, and wherein, in an image indicated when said stored image information is displayed on said image display module, data associated with said extracted target object is indicated corresponding to a place where said target object is located.

Exemplary features and advantages of the present invention will become apparent from the following detailed description when taken with the accompanying drawings in which:
Fig. 1 is a block diagram showing a structure of a local search device of a first embodiment of the present invention;
Fig. 2A and Fig. 2B are schematic diagrams illustrating an operation of a second embodiment of the present invention;
Fig. 3 is a schematic diagram illustrating an operation of a third embodiment of the present invention;
Fig. 4 is a schematic diagram illustrating an operation of a fourth embodiment of the present invention; and
Fig. 5 is a schematic diagram illustrating an operation of a fifth embodiment of the present invention.

Exemplary embodiments of the present invention will now be described in detail in accordance with the accompanying drawings.

Next, the embodiments of the present invention will be described with reference to the drawings.

### The first embodiment

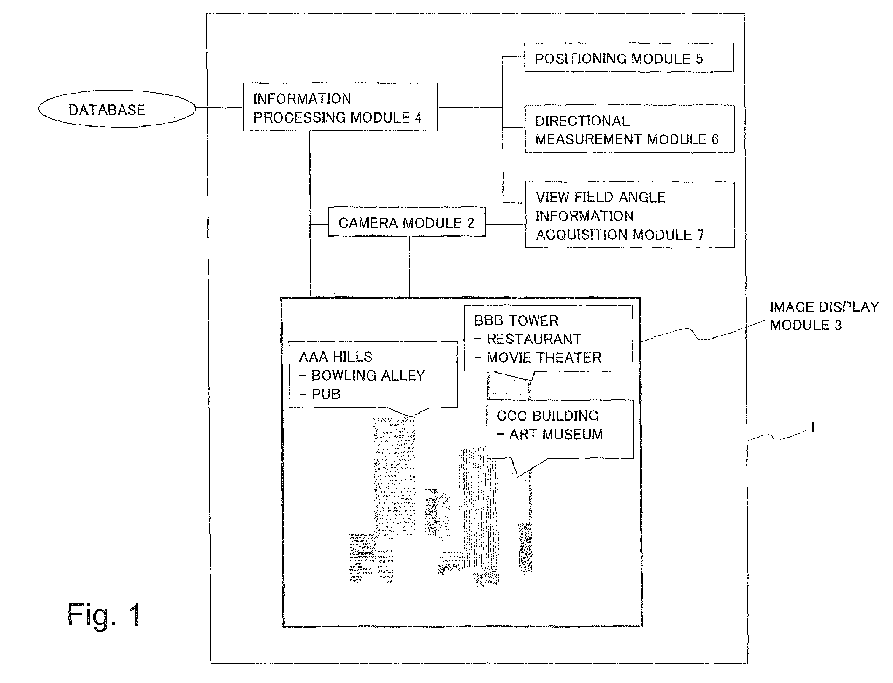

Fig. 1 is a block diagram showing a structure of a local search device of the first embodiment of the present invention.

A local search device 1 includes a camera module 2, a positioning module 5, a directional measurement module 6 and a view field angle information acquisition module 7. The camera module 2 photographs an image and acquires image information. The positioning module 5 acquires its own location information at the time when the photographing module 2 photographs an image. The directional measurement module 6 acquires direction information of photo at the time when the camera module 2 photographs an image. The view field angle information acquisition module 7 acquires field angle of view information at the time when the camera module 2 photographs an image. Further, the local search device has an information processing module 4 and an image display module 3. The information processing module 4 performs acquisition, storing and processing of information including image information, its own location information, direction information of photo and field angle of view information. The image display module 3 indicates stored image information.

Based on its own location information, direction information of photo and field angle of view information acquired and stored when the camera module 2 has photographed an image, the information processing module 4 determines a direction range that fits into the photographed image-plane of the photographed image. Then, the information processing module 4 extracts a target object which exists within the direction range and data associated with the target object from a database.

In an image indicated when said stored image information is displayed, the image display module 3 indicates data associated with the extracted target object in a manner corresponding to a place in which the target object is located.

According to this first embodiment, a user turns the local search device 1 to a direction of taking a picture only at the time of shooting and acquires image information using the local search device 1. Because the acquired image information is stored in the information processing module 4, the user can, after that, by operation by his/her hand, make the stored image be displayed on the image display module 3 and obtain required information while looking at the image display module 3. For this reason, the user does not need to keep using a camera in the state that the camera faces the photographic subject always, and thus, there are no cases that the user's load becomes large by long time use. Also, because it is not necessary for a user to stay at a photographing location, the user can also avoid situations such as staying for a long time on a road with a large traffic volume and the like.

Meanwhile, the database may be provided in a manner accompanying the local search device 1, may be provided in an external remote location, or may be provided in both the device and a remote location. According to the kind and the size of the information that is to be a subject matter, a user can decide a structure of a database.

### The second embodiment

Next, the second embodiment of the present invention will be described.

According to the second embodiment, although the basic structure of a local search device is similar to one shown in Fig. 1, a liquid crystal display equipped with a pointing device using a touch panel is used as the image display module 3. An electronic still camera by a CMOS image sensor is used as the camera module 2. The view field angle information acquisition module 7 reads a set value of an field angle of view of the electronic still camera used as the camera module 2 at the time of photographing. The positioning module 5 acquires its own location information at the time of photographing by position determination system such as GPS, for example. The directional measurement module 6 acquires a photographing direction by a direction measurement apparatus such as an electronic compass. Meanwhile, the database is provided in a manner accompanying the local search device 1. On the other hand, about a target object that is to be a search target and its associated data, necessary data is read from an external database and stored in the database accompanying the local search device 1.

The information processing module 4 decides a direction range which fits into a photographed image-plane based on its own location information, direction information of photo and field angle of view information which the positioning module 5, the directional measurement module 6 and the view field angle information acquisition module 7 have acquired respectively. The information processing module 4 searches for a target object existing in the direction range and data associated with the target object from data stored in the database to extract it. Here, data associated with a target object includes characteristics information such as: a name, a location, a shape, a tenant, a business category, a history and other characteristics information. A user can select characteristics information to be acquired according to need.

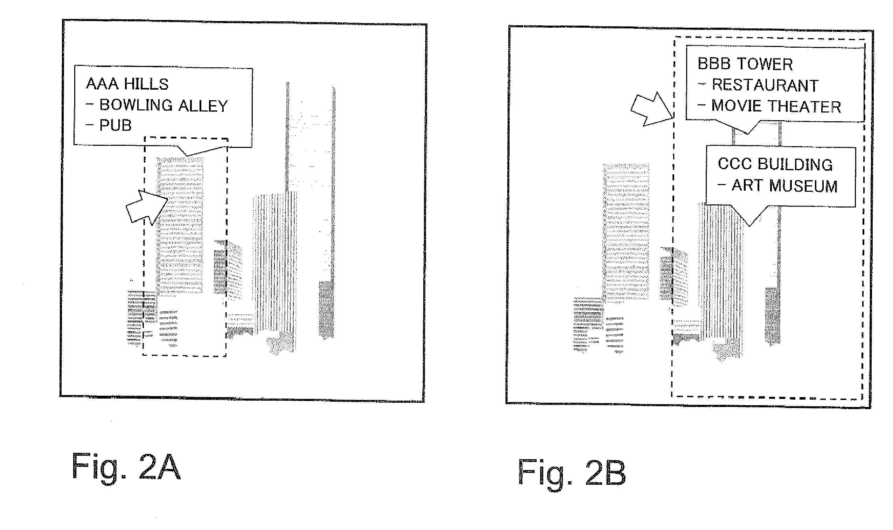

Fig. 2A and Fig. 2B are schematic diagrams illustrating an operation of the second embodiment. In Fig. 2A, it is arranged such that, in the state that image information photographed by the camera module 2 and stored in the information processing module 4 is being indicated on the image display module 3, only associated data of a specific target object which has been designated by a pointing device among indicated target objects is indicated. Also, as shown in Fig. 2B, it may be arranged such that, when the user designates a specific area on the screen, only associated data of target objects located in the designated area is displayed on the screen by the image display module 3.

Thus, according to the second embodiment, because data of unnecessary target objects is not displayed when a plurality of target objects are detected, there is an advantage that indication becomes easy to be looked at and data of a desired target object can be browsed efficiently.

### The third embodiment

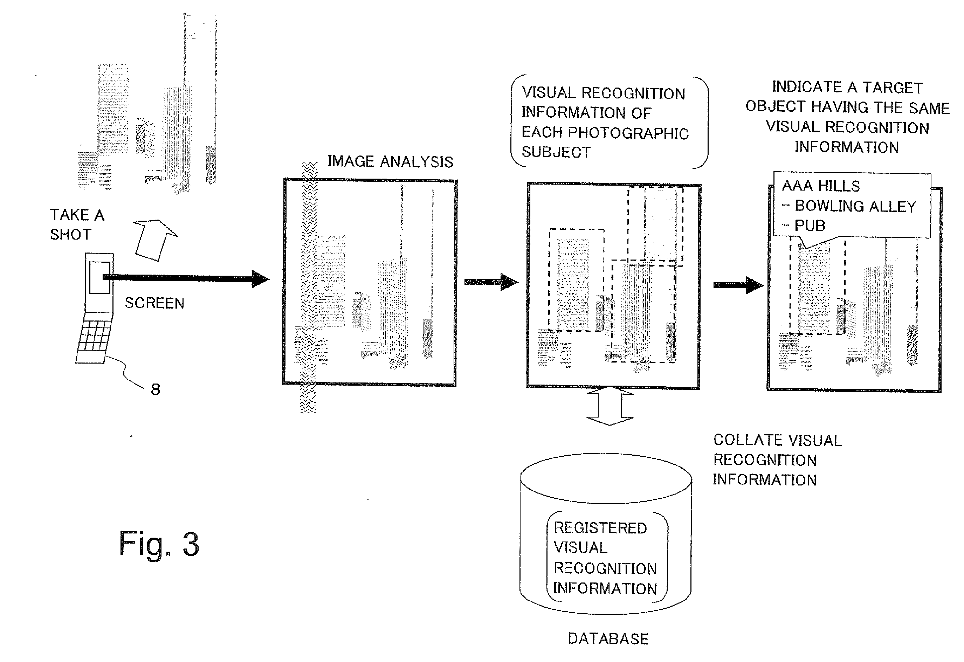

Fig. 3 is a schematic diagram illustrating an operation of the third embodiment of the present invention.

Although the basic structure and operation of the local search device of the third embodiment is the same as those indicated in the second embodiment, a camera-equipped mobile phone 8 is used as a local search device. This camera-equipped mobile phone 8 has an image analysis function. The camera-equipped mobile phone 8 also has an accompanying database. Regarding a target object which will be a search target and its associated data, necessary data is read from an external database and registered with the database accompanying the camera-equipped mobile phone 8.

Data associated with a target object registered with the accompanying database includes visual recognition information of the target object. Here, visual recognition information is visual information which distinguishes a target object concerned such as a face peculiar to a person, a logo of a character, a shape structure of a monument and composition and coloring of a painting. Visual recognition information can be extracted from an image by an image analysis function provided in the camera-equipped mobile phone 8.

As shown in Fig. 3, first, as is the case with the second embodiment, when an image is photographed from an optional direction, the camera-equipped mobile phone 8 determines a direction range which fits into a photographed image-plane of the image.

Next, the camera-equipped mobile phone 8 analyzes the photographed image, recognizes photographic subjects that show up in the image individually and extracts each piece of visual recognition information.

Next, the information processing module of the camera-equipped mobile phone 8 collates the visual recognition information of each of target objects which exist in the photography direction range among target objects registered with the accompanying database with the visual recognition information of a photographic subject extracted by the camera-equipped mobile phone 8.

When a photographic subject having the same visual recognition information as that of a registered target object exists in the image, data associated with the target object is shown on the screen in a position corresponding to the photographic subject.

Meanwhile, when a plurality of target objects are detected as a target object having the same visual recognition information as that of a photographic subject, only associated data of a specific photographic subject designated by a pointing device or the like may be indicated on the screen. Also, when a user designates a specific area on the screen, only associated data of target objects located in the designated area may be displayed on the selection screen by the image display module 3.

According to the third embodiment, because not only geographical data, but also the visual feature of a target object is made be a search condition, there is an advantage that detection accuracy and detection efficiency of a desired target object is improved substantially.

### The fourth embodiment

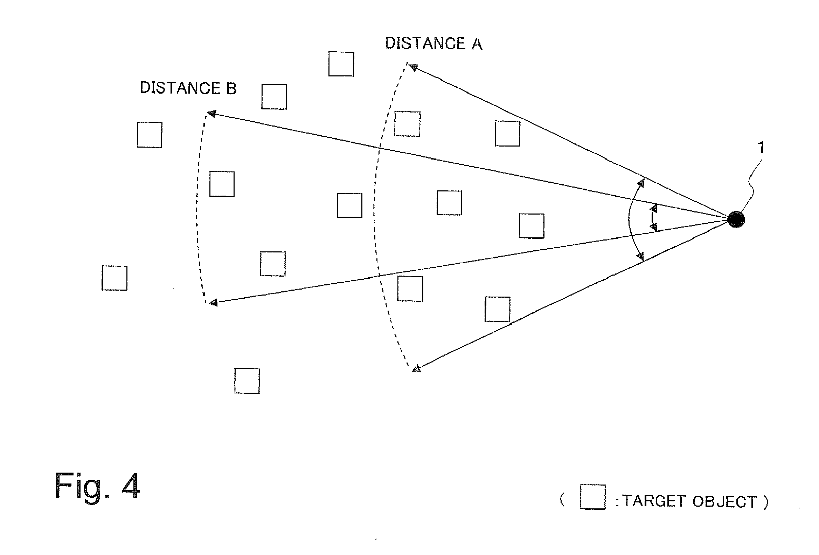

Fig. 4 is a schematic diagram illustrating an operation of the fourth embodiment of the present invention.

According to the fourth embodiment, when an image has been photographed in a certain direction, among target objects which have been registered with an accompanying database and which exist in that image direction, the local search device 1 indicates only data associated with a target object which exists within a certain distance range. That is, the location of a target object registered with a database is registered as associated data. Referring to this location data, the local search device 1 according to the fourth embodiment can designate an area so that target objects in a place farther than distance a are excluded, or that only data of target objects existing in the range from distance a to distance b are indicated, as shown in Fig. 4, for example.

Here, a distance that specifies a search range (hereinafter, referred to as a search distance) can be designated by field angle of view information. For example, as shown in Fig. 4, the camera module 2 of the local search device 1 widens the field angle of view when a near location is photographed, and narrows the field angle of view when a distant place is photographed. That is, a search distance depends on a field angle of view. A user can display a sight that he/she is looking at on the image display module 3 via an electronic still camera of the camera module 2, and set a search distance while adjusting a field angle of view. According to the fourth embodiment, a search distance can be set by easy operation, and thus there is a merit that search can be carried out while narrowing down an area.

### The fifth embodiment

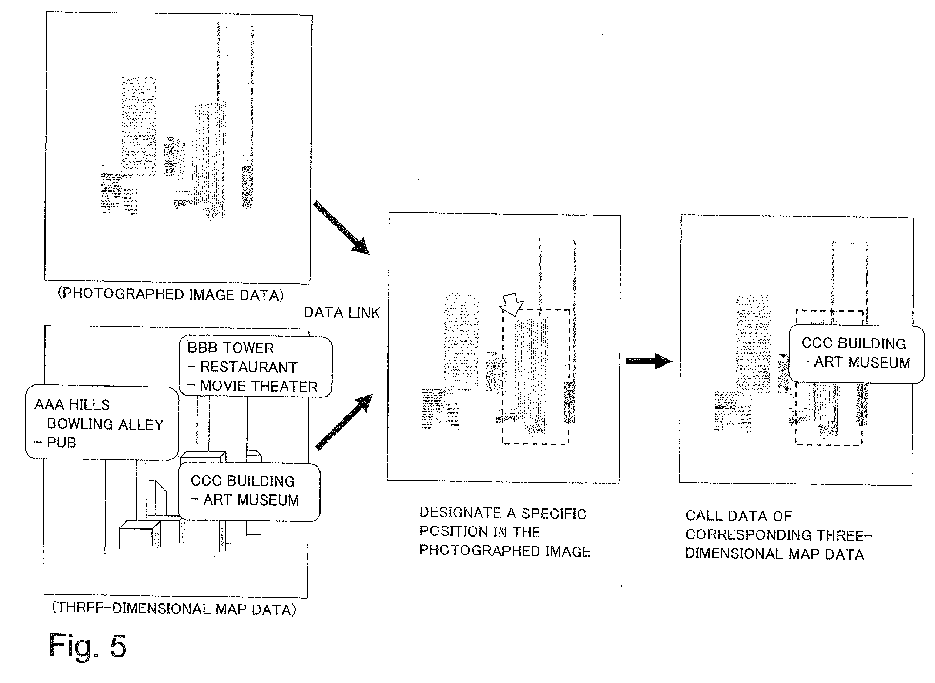

Fig. 5 is a schematic diagram illustrating an operation of the fifth embodiment of the present invention.

Like the other embodiment mentioned above, first, the local search device 1 in the fifth embodiment acquires its own location information, direction information of photo and field angle of view information at the time when an image in a certain direction is photographed, and determines a direction range which fits into the photographed image-plane of the image from these pieces of information. Meanwhile, image information on this photographed image is stored in the information processing module 4 and is shown on the image display module 3.

According to the fifth embodiment, next, the local search device 1 downloads three-dimensional map data of this direction range from an generally available three-dimensional map data providing site via the internet, and takes it in a database accompanying the local search device 1.

Then, as shown in Fig. 5, the position, the field angle and the size of a display screen of the three-dimensional map data taken in the database is adjusted so that a corresponding image component may be identical with that of the photographed image indicated on the image display module 3, and they are overlapped with each other on the image display module 3. That is, the photographed image and the three-dimensional map data screen are overlapped in the state that the corresponding relationship between the both is always kept (the data linkage state) based on its own location information, direction information of photo and field angle of view information acquired when the image has been photographed. When operation by a user such as expansion, reduction and scrolling of an image is performed to the photographed image, similar expansion, reduction and scrolling is also performed to the three-dimensional map data screen.

Meanwhile, practically, because it becomes difficult to look at an image when both of them (the photographed image and the three-dimensional map data screen) are overlapped on the screen, the setting of the screen display is set so that only a photographed image-plane is seen. When a specific target object is designated by the user on the indicated photographed image-plane, data associated with the corresponding target object in three-dimensional map data is indicated on the photographed image-plane.

According to the fifth embodiment, there is an advantage that, even in an area where associated data of surrounding target objects is not registered with a database, associated data of a target object can be obtained by linking with generally available three-dimensional map data.

However, a technology indicated in patent document 1 always has to keep using a camera mounted in a terminal apparatus in the state always facing the photographic subject. For this reason, there is a problem that long time operation is a great burden on a user and it causes hesitation to use it on a road with a lot of traffic volume, for example.

According to the present invention, in a search of local, a camera mounted in a terminal apparatus does not always need to be operated in the state facing a photographic subject, and a user's burden and restriction on how to use it can be reduced substantially.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

Further, it is the inventor's intention to retain all equivalents of the claimed invention even if the claims are amended during prosecution.

## Claims

1. A local search device, comprising: a camera module photographing an image and acquiring image information;
a positioning module, a directional measurement module and an view field angle information acquisition module, for acquiring location information of its own, direction information of photo and field angle of view information at a time when said camera module photographs an image, respectively;
an information processing module for storing and processing information including said image information, said location information of its own. said direction information of photo and said field angle of view information; and
an image display module for indicating said stored image information, wherein
said information processing module determines, from said location information of its own, said direction information of photo and said field angle of view information acquired and stored when said camera module has photographed an image, a direction range fitting into a photographed image-plane of said photographed image, and extracts a target object existing within said direction range and data associated with said target object from a database and wherein,
in an image indicated when said stored image information is displayed on said image display module, data associated with said extracted target object is indicated corresponding to a place where said target object is located.

2. The local search device according to claim 1, wherein visual recognition information of a target object in an image is collated with visual recognition information associated with a target object extracted from a database, said visual recognition information being extracted by analyzing said image acquired by said camera module, and, when a target object with same visual recognition information is detected, data associated with said target object is indicated in a position in said image corresponding to a position where said target object is indicated.

3. The local search device according to claim 1 or 2, wherein associated data is indicated only for a target object existing in a designated particular region of said image indicated on said image display module.

4. The local search device according to any one of claim I to claim 3, wherein a distance range for searching for a target object is set corresponding to said field angle of view information, and data associated with a target object existing within said set distance range among target objects extracted from a database is indicated.

5. The local search device according to any one of claim 1 to claim 4, wherein three-dimensional map data within said direction range is extracted from a database, and said extracted three-dimensional map data is made correspond to said image indicated on said image display module, and wherein,
when an place where an optional target object is located is designated in said image, corresponding data associated with said target object in said three-dimensional map data is indicated.

6. An local search method, comprising; a procedure of taking photograph of photographing an image and acquiring image information;
a positioning procedure, a directional measurement procedure and an view field angle information acquisition procedure of acquiring location information of its own, direction information of photo and field angle of view information at a time when an image is photographed, respectively;
an information processing procedure of storing and processing information including said image information, said location information of its own, said direction information of photo and said field angle of view information; and
an image display procedure of indicating said stored image information, wherein,
from said location information of its own, said direction information of photo and said field angle of view information acquired and stored when an image has been photographed in said procedure of taking photograph, a direction range fitting into a photographed image-plane of said photographed image is determined, wherein
a target object existing within said direction range and data associated with said target object is extracted from a database, and wherein,
in an image indicated when said stored image information is displayed, data associated with said extracted target object is indicated corresponding to a place where said target object is located.

7. The local search method according to claim 6. wherein visual recognition information of a target object in an image is collated with visual recognition information associated with a target object extracted from a database, said visual recognition information being extracted by analyzing said image acquired in said procedure of taking photograph and, when a target object with same visual recognition information is detected, data associated with said target object is indicated in a position in said image corresponding to a position where said target object is indicated.

8. The local search method according to claim 6 or 7, wherein associated data is indicated only for a target object existing in a designated particular region of said indicated image.

9. The local search method according to any one of claim 6 to claim 8, wherein a distance range for searching for a target object is set corresponding to said field angle of view information and data associated with a target object existing within said set distance range among target objects extracted from a database is indicated.

10. The local search method according to any one of claim 6 to claim 9, wherein three-dimensional map data within said direction range is extracted from a database, and said extracted three-dimensional map data is made correspond to said indicated image, and wherein,
when an place where an optional target object is located is designated in said image, corresponding data associated with said target object in said three-dimensional map data is indicated.
